# EUROPEAN PATENT SPECIFICATION

(11) **EP 2 381 384 B1**
(45) Date of publication and mention of the grant of the patent: **27.02.2019**
(21) Application number: 10160590.5
(22) Date of filing: 21.04.2010
(51) Int. Cl.: G06F 21/36, G06F 3/041, G06F 3/01

(54) **Method of providing security on a portable electronic device having a touch-sensitive display**
Verfahren zur Bereitstellung von Sicherheit in einem tragbaren elektronischen Gerät mit einer berührungsempfindlichen Anzeige
Procédé pour fournir une sécurité sur un dispositif électronique portable doté d'un écran tactile

(43) Date of publication of application: 26.10.2011
(73) Proprietor: BlackBerry Limited, Waterloo, ON N2K 0A7 (CA)
(72) Inventor: Lee, Yun, Sun, Rolling Meadows, IL 60008 (US)
(74) Representative: MERH-IP Matias Erny Reichl Hoffmann Patentanwälte PartG mbB

(56) References cited:
- EP-A1- 1 909 161
- WO-A2-03/029950
- US-A1- 2009 160 800
- US-A1- 2009 307 768
- US-A1- 2009 313 693
- US-A1- 2010 052 880
- "Handbook for Palm (TM) Tungsten (TM) T Handhelds Copyright", , 31 December 2002 (2002-12-31), XP055270852, Retrieved from the Internet: URL:http://content.etilize.com/User-Manual /10106581.pdf [retrieved on 2016-05-06]

## Description

### TECHNICAL FIELD

The present disclosure relates to computing devices, and in particular to a method of providing security on a portable electronic device and a portable electronic device having a touch-sensitive display configured to provide secure access.

### BACKGROUND

Electronic devices, including portable electronic devices, have gained widespread use and may provide a variety of functions including, for example, telephonic, electronic messaging and other personal information manager (PIM) application functions. Portable electronic devices include, for example, several types of mobile stations such as simple cellular telephones, smart telephones, wireless personal digital assistants (PDAs), and laptop computers with wireless 802.11 or Bluetooth™ capabilities.

The mobile nature of portable electronic devices necessitates the provision of security features such as device locking to prevent the unauthorized use of such devices if stolen or lost by the device user. However, locking mechanisms used for handheld electronic devices are often "ports" or copies of those applied in the context of desktop computers or other stationary computers with little or no modification. These types of locking mechanisms do not take into consideration the unique environment and context in which handheld electronic devices are used relative to desktop computers.

A touch-sensitive display, also known as a touchscreen display, is particularly useful on portable electronic devices, which are small and have limited space for user input and output. The information displayed on the touch-sensitive displays may be modified depending on the functions and operations being performed. However, conventional security mechanisms do not properly take into account the features of touch-sensitive displays. While onscreen slider bars have been used as unlocking mechanisms for portable electronic devices having a touch-sensitive display, these solutions are typically used to prevent accidental unlocks after the device has been locked to disable the touch-sensitive display (for example, so the device can be placed in pocket or purse or used while exercising) and do not provide any security from unauthorized access. Accordingly, improvements in security mechanisms for portable electronic devices having a touch-sensitive display are desirable.

Document US2009/0313693 A1 discloses a device comprising means for unlocking the device based on a set of input touch gestures. The touch gestures take into consideration at least direction and length of the gesture.

Document "Handbook for Palm (TM) Tungsten (TM) T Handheld", published in 2002, discloses an input method based on touch gestures. The gestures may be input at any location of the input area, the size of the gestures is ignored although the gesture must be complete. The touch sensitive input area is separated from the display area.

### BRIEF DESCRIPTION OF THE DRAWINGS

Figure 1 is a simplified block diagram of components of a portable electronic device in accordance with one example embodiment of the present disclosure;
Figure 2A is a front view of an example of a portable electronic device in a portrait orientation;
Figure 2B is a front view of the portable electronic device of Figure 2A in portrait orientation showing hidden detail in ghost outline;
Figure 3A is a sectional side view of portions of the portable electronic device of Figure 2A;
Figure 3B is a side view of a portion of the portable electronic device shown in Figure 3A;
Figure 4 is a flowchart illustrating a method of providing security on a portable electronic device in accordance with one example embodiment of the present disclosure;
Figure 5 shows a flowchart illustrating a method for evaluating gesture passcode sequences for unlocking a portable electronic device in accordance with one example embodiment of the present disclosure;
Figure 6 shows in diagrammatic form an example user interface screen for setting security features of portable electronic device;
Figure 7 shows in diagrammatic form the example user interface screen of Figure 6 with a dialog box presenting a change gesture password option;
Figure 8 shows in diagrammatic form the example user interface screen of Figure 6 with a dialog box presenting a gesture password change box;
Figures 9A to 9E show a front view of an example of a portable electronic device with example user interface screens for use in a method for evaluating gesture passcode sequences for unlocking a portable electronic device in accordance with one example embodiment of the present disclosure; and
Figure 10 is a block diagram of a circuit for controlling the actuators of the portable electronic device in accordance with one example embodiment of the present disclosure.

### DETAILED DESCRIPTION OF EXAMPLE EMBODIMENTS

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

The disclosure generally relates to an electronic device, which is a portable electronic device in the embodiments described herein. Examples of portable electronic devices include mobile, or handheld, wireless communication devices such as pagers, cellular phones, cellular smart-phones, wireless organizers, personal digital assistants, wirelessly enabled notebook computers, and so forth. The portable electronic device may also be a portable electronic device without wireless communication capabilities, such as a handheld electronic game device, digital photograph album, digital camera, or other device.

The present description of example embodiments does not limit implementation to any particular computer programming language or system architecture. Embodiments described in the specification are not limited to any particular operating system (OS), mobile device architecture, server architecture, or computer programming language.

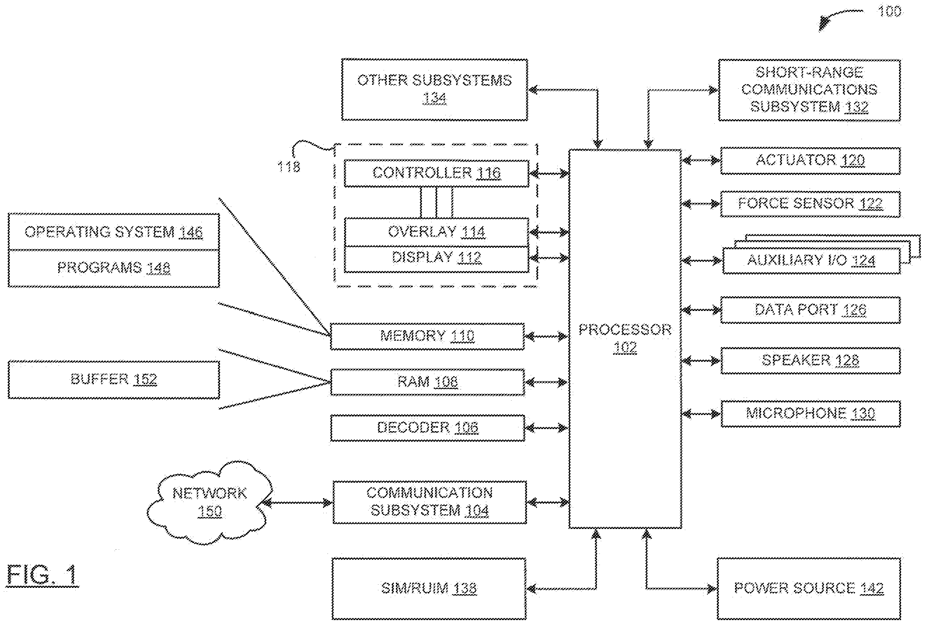

A block diagram of an example of a portable electronic device 100 is shown in Figure 1. The portable electronic device 100 includes multiple components, such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the portable electronic device 100.

The processor 102 interacts with other components, such as Random Access Memory (RAM) 108, memory 110, a display screen 112 (such as a liquid crystal display (LCD)) with a touch-sensitive overlay 114 operably connected to an electronic controller 116 that together comprise a touch-sensitive display 118, one or more actuators 120, one or more force sensors 122, one or more auxiliary input/output (I/O) subsystems 124, a data port 126, a speaker 128, a microphone 130, short-range communications subsystem 132, and other device subsystems 134. User-interaction with a graphical user interface (GUI) is performed through the touch-sensitive overlay 114. The processor 102 interacts with the touch-sensitive overlay 114 via the electronic controller 116. Information, such as text, characters, symbols, images, icons, and other items that may be displayed or rendered on a portable electronic device, is displayed on the touch-sensitive display 118 via the processor 102.

The auxiliary I/O subsystems 124 could include other input devices such as one or more control keys, a keyboard or keypad, navigation device, or any combination thereof. The navigation device may be a depressible/clickable trackball, a depressible/clickable scroll wheel, a touch-sensitive optical trackpad, or a touch-sensitive touchpad.

To identify a subscriber for network access, the portable electronic device 100 uses a Subscriber Identity Module or a Removable User Identity Module (SIM/RUIM) card 138 for communication with a network, such as the wireless network 150. Alternatively, user identification information may be programmed into memory 110.

The portable electronic device 100 includes an operating system 146 and software applications or programs 148 that are executed by the processor 102 and are typically stored in a persistent, updatable store such as the memory 110. Additional applications or programs 148 may be loaded onto the portable electronic device 100 through the wireless network 150, the auxiliary I/O subsystem 124, the data port 126, the short-range communications subsystem 132 or any other suitable subsystem 134.

A received signal such as a text message, an e-mail message, or web page download is processed by the communication subsystem 104 and input to the processor 102. The processor 102 processes the received signal for output to the display screen 112 and/or to the auxiliary I/O subsystem 124. A subscriber may generate data items, for example e-mail messages, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing.

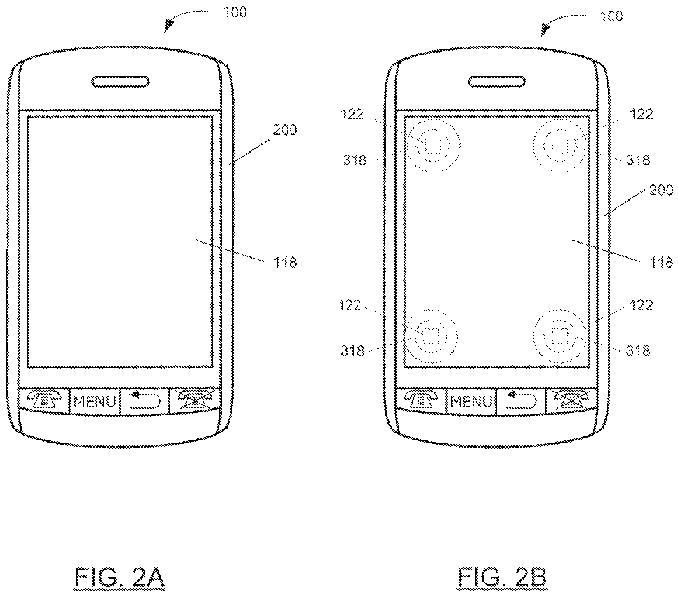

Figure 2A shows a front view of an example of a portable electronic device 100 in portrait orientation. The portable electronic device 100 includes a housing 200 that houses internal components including internal components shown in Figure 1 and frames the touch-sensitive display 118 such that the touch-sensitive display 118 is exposed for user-interaction therewith when the portable electronic device 100 is in use. It will be appreciated that the touch-sensitive display 118 may include any suitable number of user-selectable features rendered thereon, for example, in the form of virtual buttons for user-selection of, for example, applications, options, or keys of a keyboard for user entry of data during operation of the portable electronic device 100.

The touch-sensitive display 118 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth, as known in the art. A capacitive touch-sensitive display includes a capacitive touch-sensitive overlay 114. The overlay 114 may be an assembly of multiple layers in a stack including, for example, a substrate, a ground shield layer, a barrier layer, one or more capacitive touch sensor layers separated by a substrate or other barrier, and a cover. The capacitive touch sensor layers may be any suitable material, such as patterned indium tin oxide (ITO).

One or more touches, also known as touch contacts or touch events, may be detected by the touch-sensitive display 118. The processor 102 may determine attributes of the touch, including a location of a touch. Touch location data may include an area of contact or a single point of contact, such as a point at or near a centre of the area of contact. The location of a detected touch may include x and y components, e.g., horizontal and vertical components, respectively, with respect to one's view of the touch-sensitive display 118. For example, the x location component may be determined by a signal generated from one touch sensor, and the y location component may be determined by a signal generated from another touch sensor. A signal is provided to the controller 116 in response to detection of a touch. A touch may be detected from any suitable object, such as a finger, thumb, appendage, or other items, for example, a stylus, pen, or other pointer, depending on the nature of the touch-sensitive display 118. Multiple simultaneous touches may be detected. The centre of the area of contact of each touch is commonly referred to as the touch point or centroid. It will be appreciated that during a touch event the touch point moves as the object detected by the touch-sensitive display 118 moves.

The actuators 120 comprise one or more piezoelectric devices that provide tactile feedback for the touch-sensitive display 118. The actuators 120 may be depressed by applying sufficient force to the touch-sensitive display 118 to overcome the actuation force of the actuators 120. The actuators 120 may be actuated by pressing anywhere on the touch-sensitive display 118. The actuator 120 may provide input to the processor 102 when actuated. Contraction of the piezoelectric actuators applies a spring-like force, for example, opposing a force externally applied to the touch-sensitive display 118. Each piezoelectric actuator includes a piezoelectric device, such as a piezoelectric (PZT) ceramic disk adhered to a metal substrate. The metal substrate bends when the PZT disk contracts due to build up of charge at the PZT disk or in response to a force, such as an external force applied to the touch-sensitive display 118. The charge may be adjusted by varying the applied voltage or current, thereby controlling the force applied by the piezoelectric disks. The charge on the piezoelectric actuator may be removed by a controlled discharge current that causes the PZT disk to expand, releasing the force thereby decreasing the force applied by the piezoelectric disks. The charge may advantageously be removed over a relatively short period of time to provide tactile feedback to the user. Absent an external force and absent a charge on the piezoelectric disk, the piezoelectric disk may be slightly bent due to a mechanical preload.

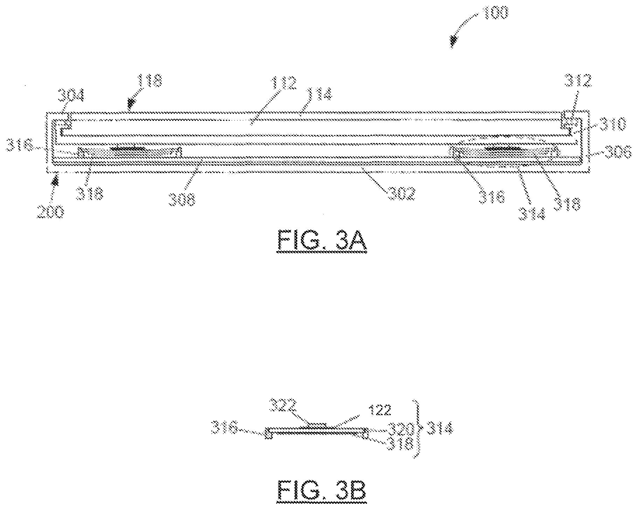

The housing 200 can be any suitable housing for the internal components shown in Figure 1. Figure 3A shows a sectional side view of portions of the portable electronic device 100 and Figure 3B shows a side view of a portion of the actuators 120. The housing 200 in the present example includes a back 302, a frame 304, which frames the touch-sensitive display 118 and sidewalls 306 that extend between and generally perpendicular to the back 302 and the frame 304. A base 308 is spaced from and is generally parallel to the back 302. The base 308 can be any suitable base and can include, for example, a printed circuit board or flexible circuit board supported by a stiff support between the base 308 and the back 302. The back 302 may include a plate (not shown) that is releasably attached for insertion and removal of, for example, the power source 142 and the SIM/RUIM card 138 referred to above. It will be appreciated that the back 302, the sidewalls 306 and the frame 304 may be injection molded, for example. In the example of the portable electronic device 100 shown in Figure 2, the frame 304 is generally rectangular with rounded corners, although other shapes are possible.

The display screen 112 and the touch-sensitive overlay 114 are supported on a support tray 310 of suitable material such as magnesium for providing mechanical support to the display screen 112 and touch-sensitive overlay 114. A compliant spacer such as gasket compliant 312 is located around the perimeter of the frame 304, between an upper portion of the support tray 310 and the frame 304 to provide a gasket for protecting the components housed in the housing 200 of the portable electronic device 100. A suitable material for the compliant gasket 312 includes, for example, a cellular urethane foam for providing shock absorption, vibration damping and a suitable fatigue life. In some embodiments, a number of compliant spacers may be provided to provide the function of the gasket compliant 312.

The actuators 120 includes four piezoelectric disk actuators 314, as shown in Figure 2B, with each piezoelectric disk actuator 314 located near a respective corner of the touch-sensitive display 118. Referring again to Figures 3A and 3B, each piezoelectric disk actuator 314 is supported on a respective support ring 316 that extends from the base 308 toward the touch-sensitive display 118 for supporting the respective piezoelectric disk actuator 314 while permitting flexing of the piezoelectric disk actuator 314. Each piezoelectric disk actuator 314 includes a piezoelectric disk 318 such as a PZT ceramic disk. This piezoelectric disk is adhered to a metal substrate 320 of larger diameter than the piezoelectric disk 318 for bending when the piezoelectric disk 318 contracts as a result of build up of charge at the piezoelectic
disk 318. Each piezoelectric disk actuator 314 is supported on the respective support ring 316 on one side of the base 308, near respective corners of the metal substrate 320, base 308 and housing 200. The support 316 ring is sized such that the edge of the metal substrate 320 contacts the support ring 316 for supporting the piezoelectric disk actuator 314 and permitting flexing of the piezoelectric disk actuator 314.

A shock-absorbing element 322, which in the present example is in the form of a cylindrical shock-absorber of suitable material such as a hard rubber is located between the piezoelectric disk actuator 314 and the support tray 310. A respective force sensor 122 is located between each shock-absorbing element 322 and the respective piezoelectric disk actuator 314. A suitable force sensor 122 includes, for example, a puck-shaped force sensing resistor for measuring applied force (or pressure). It will be appreciated that a force can be determined using a force sensing resistor as an increase in pressure on the force sensing resistor results in a decrease in resistance (or increase in conductance). In the portable electronic device 100, each piezoelectric disk actuator 314 is located between the base 308 and the support tray 310 and force is applied on each piezoelectric disk actuator 314 by the touch-sensitive display 118, in the direction of the base 308, causing bending of the piezoelectric disk actuator 314. Thus, absent an external force applied by the user, for example by pressing on the touch-sensitive display 118, and absent a charge on the piezoelectric disk actuator 314, the piezoelectric disk actuator 314 undergoes slight bending. An external applied force in the form of a user pressing on the touch-sensitive display 118 during a touch event, and prior to actuation of the piezoelectric disk actuator 314, causes increased bending of the piezoelectric disk actuator 314 and the piezoelectric disk actuator 314 applies a spring force against the touch-sensitive display 118. When the piezoelectric disk 318 is charged, the piezoelectric disk 318 shrinks and causes the metal substrate 320 and piezoelectric disk 318 to apply a further force, opposing the external applied force, on the touch-sensitive display 118 as the piezoelectric actuator 314 straightens.

Each of the piezoelectric disk actuators 314, shock absorbing elements 322 and force sensors 122 are supported on a respective one of the support rings 316 on one side of the base 308. The support rings 316 can be part of the base 308 or can be supported on the base 308. The base 308 can be a printed circuit board while the opposing side of the base 308 provides mechanical support and electrical connection for other components (not shown) of the portable electronic device 100. Each piezoelectric disk actuator 314 is located between the base 308 and the support tray 310 such that an external applied force on the touch-sensitive display 118 resulting from a user pressing the touch-sensitive display 118 can be measured by the force sensors 122 and such that the charging of the piezoelectric disk actuator 314 causes a force on the touch-sensitive display 118, away from the base 308.

In the present embodiment each piezoelectric disk actuator 314 is in contact with the support tray 310. Thus, depression of the touch-sensitive display 118 by user application of a force thereto is determined by a change in resistance at the force sensors 122 and causes further bending of the piezoelectric disk actuators 314 as shown in Figure 3A. Further, the charge on the piezoelectric disk actuator 314 can be modulated to control the force applied by the piezoelectric disk actuator 314 on the support tray 310 and the resulting movement of the touch-sensitive display 118. The charge can be modulated by modulating the applied voltage or current. For example, a current can be applied to increase the charge on the piezoelectric disk actuator 314 to cause the piezoelectric disk 318 to contract and to thereby cause the metal substrate 320 and the piezoelectric disk 318 to straighten as referred to above. This charge therefore results in the force on the touch-sensitive display 118 for opposing the external applied force and movement of the touch-sensitive display 118 away from the base 308. The charge on the piezoelectric disk actuator 314 can also be removed via a controlled discharge current causing the piezoelectric disk 318 to expand again, releasing the force caused by the electric charge and thereby decreasing the force on the touch-sensitive display 118, permitting the touch-sensitive display 118 to return to a rest position.

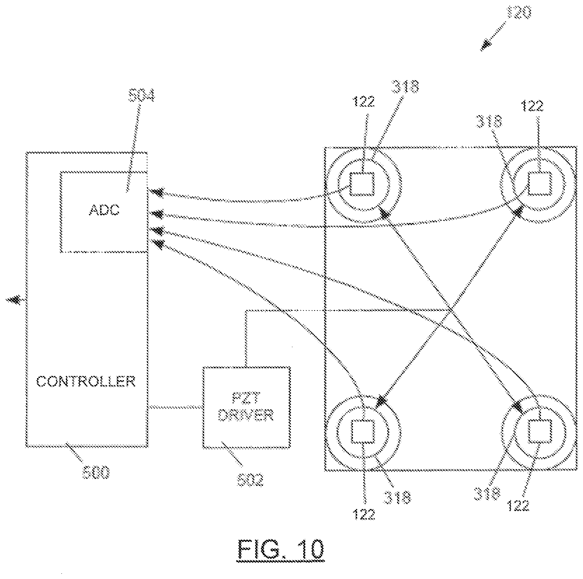

Figure 10 shows a circuit for controlling the actuators 120 of the portable electronic device 100 according to one embodiment. As shown, each of the piezoelectric disks 318 is connected to a controller 500 such as a microprocessor including a piezoelectric driver 502 and an amplifier and analog-to-digital converter (ADC) 504 that is connected to each of the force sensors 122 and to each of the piezoelectric disks 318. In some embodiments, the ADC 504 is a 9-channel ADC. The controller 500 is also in communication with the main processor 102 of the portable electronic device 100. The controller 500 can provide signals to the main processor 102 of the portable electronic device 100. It will be appreciated that the piezoelectric driver 502 may be embodied in drive circuitry between the controller 500 and the piezoelectric disks 318.

The mechanical work performed by the piezoelectric disk actuator 314 can be controlled to provide generally consistent force and movement of the touch-sensitive display 118 in response to detection of an applied force on the touch-sensitive display 118 in the form of a touch, for example. Fluctuations in mechanical work performed as a result of, for example, temperature, can be reduced by modulating the current to control the charge.

The controller 500 controls the piezoelectric driver 502 for controlling the current to the piezoelectric disks 318, thereby controlling the charge. The charge is increased to increase the force on the touch-sensitive display 118 away from the base 308 and decreased to decrease the force on the touch-sensitive display 118, facilitating movement of the touch-sensitive display 118 toward the base 308. In the present example, each of the piezoelectric disk actuators 314 are connected to the controller 500 through the piezoelectric driver 502 and are all controlled equally and concurrently. Alternatively, the piezoelectric disk actuators 314 can be controlled separately.

The portable electronic device 100 is controlled generally by monitoring the touch-sensitive display 118 for a touch event thereon, and modulating a force on the touch-sensitive display 118 for causing a first movement of the touch-sensitive display 118 relative to the base 308 of the portable electronic device 100 in response to detection of a touch event. The force is applied by at least one of the piezoelectric disk actuators 314, in a single direction on the touch-sensitive input surface of the touch-sensitive display 118. In response to determination of a touch event, the charge at each of the piezoelectric disks 318 is modulated to modulate the force applied by the piezoelectric disk actuators 314 on the touch-sensitive display 118 and to thereby cause movement of the touch-sensitive display 118 for simulating the collapse of a dome-type switch. When the end of the touch event is detected, the charge at each of the piezoelectric disks 318 is modulated to modulate the force applied by the piezoelectric disk actuators 314 to the touch-sensitive display 118 to cause movement of the touch-sensitive display 118 for simulating release of a dome-type switch.

The touch-sensitive display 118 is moveable within the housing 200 as the touch-sensitive display 118 can be moved away from the base 308, thereby compressing the compliant gasket 312, for example. Further, the touch-sensitive display 118 can be moved toward the base 308, thereby applying a force to the piezoelectric disk actuators 314. By this arrangement, the touch-sensitive display 118 is mechanically constrained by the housing 200 and resiliently biased by the compliant gasket compliant 312. In at least some embodiments, the touch-sensitive display 118 is resiliently biased and moveable between at least a first (rest) position and a second (actuated) position in response to externally applied forces wherein the touch-sensitive display 118 applies a greater force to the force sensors 122 in the second position than in the first position. The movement of the touch-sensitive display 118 in response to externally applied forces is detected by the force sensors 122.

The analog-to-digital converter 504 is connected to the piezoelectric disks 318. In addition to controlling the charge at the piezoelectric disks 318, an output, such as a voltage output, from a charge created at each piezoelectric disk 318 may be measured based on signals received at the analog to digital converter 504. Thus, when a pressure is applied to any one of the piezoelectric disks 318 causing mechanical deformation, a charge is created. A voltage signal, which is proportional to the charge, is measured to determine the extent of the mechanical deformation. Thus, the piezoelectric disks 318 also act as sensors for determining mechanical deformation.

In other embodiments, the actuator 120 is a mechanical dome-type switch or a plurality of mechanical dome-type switches. The actuator can be located in any suitable position such that displacement of the touch-sensitive display 118 resulting from a user pressing the touch-sensitive display 118 with sufficient force to overcome the bias and to overcome the actuation force for the switch, depresses and actuates the switch.

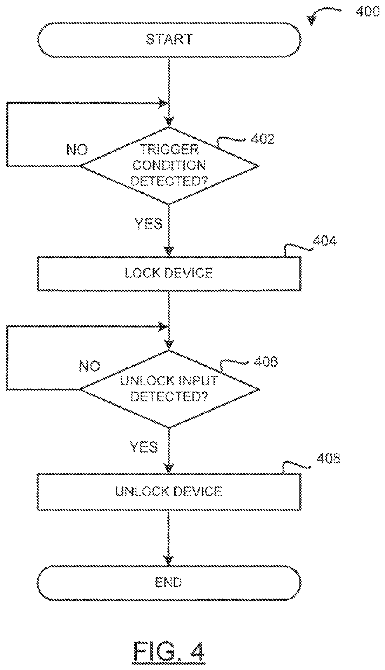

Figure 4 illustrates an example process 400 of providing security on a portable electronic device 100 in accordance with one example embodiment of the present disclosure. The portable electronic device 100 monitors for one or more trigger conditions (block 402). The one or more trigger conditions may include any one or more of a selection of a sleep/standby option or device lock option via corresponding input, user inactivity for a predetermined duration, lack of wireless network coverage for a predetermined duration, a holstering or closing of the portable electronic device 100, or other suitable trigger condition. The portable electronic device 100 is locked in response to detecting a trigger condition (block 404). In the locked state, restrictions limiting interaction with the portable electronic device 100 are enforced. The restrictions typically affect at least some of its input interfaces/devices (e.g., overlay 114, actuators 120, auxiliary I/O 124) and at least some of its output interfaces/devices (e.g., display screen 112, speaker 128).

When in the locked state, the portable electronic device 100 monitors for and detects predetermined input for unlocking the portable electronic device 100 comprising a sequence of touch gestures received via the touch-sensitive display (block 406). When the portable electronic device 100 detects a sequence of touch gestures received via the touch-sensitive display which match a predetermined passcode sequence of touch gestures, the portable electronic device 100 is unlocked (block 408). In the unlocked (normal) state, the restrictions limiting interaction with the portable electronic device 100 which were enforced in the locked state are removed and normal operations resume.

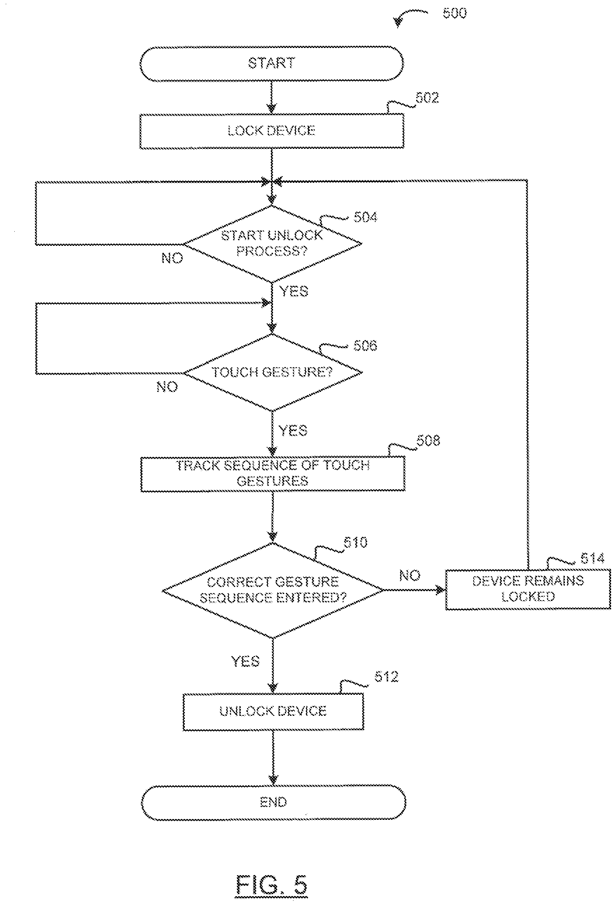

Referring now to Figure 5, an example process 500 for unlocking a portable electronic device in accordance with one embodiment of the present disclosure will be described. The steps of Figure 5 may be carried out by routines or subroutines of software executed by, for example, the processor 102. The coding of software for carrying out such steps is well within the scope of a person of ordinary skill in the art given the present disclosure.

The process 500 provides a mechanism for unlocking the portable electronic device 100 via a predetermined series of touch gestures on the touch-sensitive display 118 in a manner that is both flexible and which seeks to provide improved security. The process begins with the portable electronic device 100 in a locked state (block 502) which may be triggered in the manner described above. While in the locked state, the portable electronic device 100 monitors for a predetermined input for starting the unlock process (block 504). The predetermined input may be selection of a virtual button on the touch-sensitive display 118 to start the unlock process or any other suitable input. For example, in other embodiments the predetermined input may be depression or actuation of a dedicated key or button, a predetermined key or key combination in a keyboard of the portable electronic device 100, or a predetermined control button among several control buttons on the portable electronic device 100.

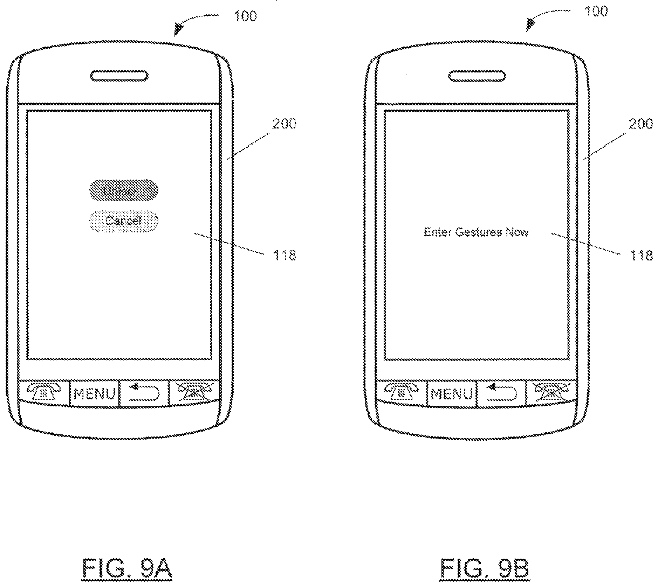

In some embodiments, a prompt for the predetermined input may be displayed on the touch-sensitive display 118 in response to preliminary input. The preliminary input may be any input, or possibly selected input, via input interfaces of the portable electronic device 100 when in the locked state. In some embodiments, depression or actuation of the touch-sensitive display 118 via the actuators 120, depression or actuation of any button or key, or any touch input when the portable electronic device 100 is in the locked state triggers the display of a virtual "unlock" button on the touch-sensitive display 118 which must be selected to initiate the unlock process as shown in the example user interface screen of Figure 9A. A virtual "cancel" button may also be displayed on the touch-sensitive display 118. Selection of the virtual "cancel" button removes the prompt from the touch-sensitive display 118 (i.e., removes the virtual "unlock" and "cancel" buttons and any associated dialog box) and the portable electronic device 100 remains locked. A time out caused by a lack of selection input selecting the virtual "unlock" button within a predetermined duration from the display of the prompt may also cause the prompt to be removed in some embodiments.

It will be appreciated that the locked state may be associated with a sleep mode in which components of the portable electronic device 100 are placed in an energy saving mode to conserve power in some embodiments. The sleep mode may comprise disabling/deactivating the backlight of the touch-sensitive display 118 among other things. In such embodiments, the preliminary input also causes the backlight of the touch-sensitive display 118 to be enabled/re-activated as well as displaying the prompt for the predetermined input.

Next, after predetermined input for starting the unlock process is received the processor 102 monitors for touch gestures via the touch-sensitive display 118 (block 506). In some embodiments, a prompt for entry of the predetermined touch gesture passcode sequence to unlock the portable electronic device 100 may be displayed on the touch-sensitive display 118 in response to the predetermined input for unlocking the portable electronic device 100 as shown in the example user interface screen of Figure 9B. Alternatively, a blank user interface screen may be displayed on the touch-sensitive display 118 rather than a prompt.

While a prompt such as "Enter Gestures Now" may be displayed as shown in Figure 9B to 9E, to enhance security no hints, references or directional guides are displayed on the touch-sensitive display 118. This reduces the possibility that the entry of the touch gesture passcode sequence by the device user may be observed by others, thereby compromising the passcode sequence. This also reduces the possibility that the touch gesture passcode sequence may be guessed by others since there is no visual cue or guide as to the nature of the touch gestures which make up the touch gesture passcode sequence, or even the number of touch gestures in the touch gesture passcode sequence. Moreover, the absence of an onscreen guide or user interface element for unlocking the portable electronic device 100 such as onscreen slider bar avoids the problem of obscuring onscreen elements which is inherent in these unlocking solutions.

It will be appreciated that a touch gesture is performed by touching the touch-sensitive display 118 in a predetermined manner, typically using a finger, so as to move the touch point (e.g. centroid) of the area of contact during the touch event. The processor 102 is configured to detect touch gestures at any location on the touch-sensitive display 118. The ability to perform touch gestures at any location on the touch-sensitive display 118 provides a larger area for interaction with the touch-sensitive display 118 which reduces the targeting which is required by the user. This may also reduce the number of erroneous inputs generated when interacting with the touch-sensitive display 118 which are inefficient in terms of processing resources, use unnecessary power which reduces battery life, and may result in an unresponsive user interface. This may also be advantageous in situations in which it is difficult for the user to look at the touch-sensitive display 118 without diverting attention from what the user is doing at that time, for example, when exercising or walking in a hurry.

The processor 102 requires a movement of the touch point (e.g. centroid) of the area of contact during the touch event which exceeds a predetermined minimum distance (typically measured in displayed pixels) to register a touch gesture. The predetermined minimum distance is used to debounce touch events to prevent small inadvertent movements of the centroid of the touch event from being detected as a touch gesture. The predetermined distance may be quite small (e.g., a few pixels) and may be a user configurable parameter. Touch events having a touch point which do not move by this predetermined minimum distance are not touch gestures, and are commonly selection events such as selection of an onscreen element displayed on the touch-sensitive display 118 such as a virtual button. In some embodiments, touch events which are not touch gestures are ignored by the processor 102 in the block 506.

A touch gesture may be a shape, symbol, letter or number or other gesture formed at any location on the touch-sensitive display 118. The touch gesture may be a user defined shape or symbol rather than a generally known shape, symbol, letter or number. In some embodiments, the processor 102 is configured to identify touch gestures which correspond to a single direction selected from a group of predetermined directions, or a series of directions in which each direction in the series is selected from a group of predetermined directions. The group of predetermined directions may comprise any combination of a horizontal direction (i.e., left or right), vertical direction (i.e., up or down) or diagonal direction (i.e., an up-right, down-right, up-left or down-left).

Touch data reported by the touch-sensitive display 118 is analyzed to determine whether a touch gesture has a substantially horizontal component, a substantially vertical component, or substantially diagonal component using determined variance thresholds for horizontal directions, vertical directions and diagonal directions, respectively. The distance or length of the directions is not considered. So long as the touch event has a movement which exceeds the predetermined minimum distance, the touch gesture is recognized over other touch events (such as selection inputs) and the distance of the directions is not considered. This may reduce processing as the processor 102 does not utilize the information from all contact points for the touch gesture, for example, to determine a distance of each direction.

In addition, ignoring distance when identifying touch gestures comprising a direction or series of directions allows gestures of any size to be performed so long as the overall gesture matches the touch gesture passcode sequence. This may be advantageous in situations in which it is difficult for the user to look at the touch-sensitive display 118 without diverting attention from what the user is doing at that time, for example, when exercising or walking in a hurry. Additionally, this facilitates a user performing a small touch gesture when the user perceives that he or she is in a location where others may observe the performance of large touch gesture. A smaller touch gesture is generally more difficult for others to observe.

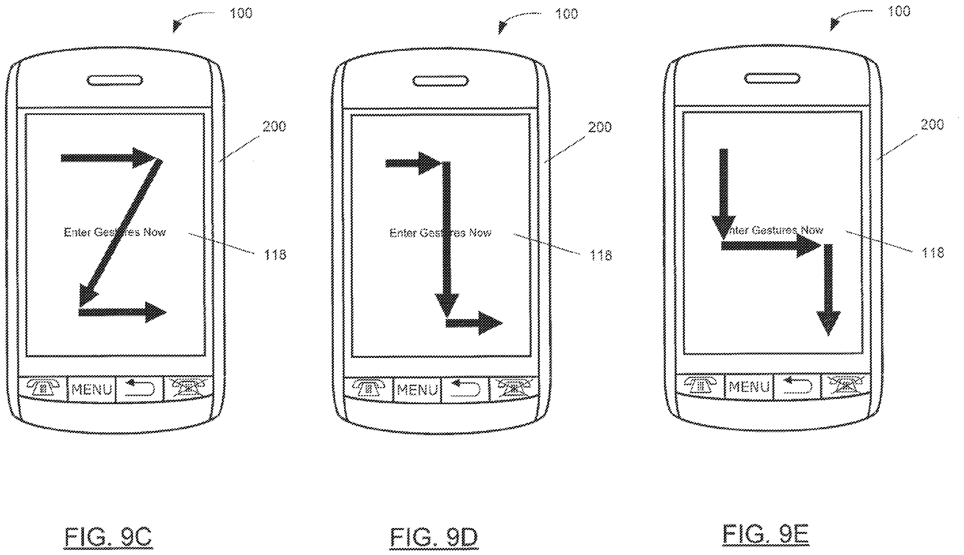

Referring briefly to Figures 9C to 9E, three touch gestures will be described for purposes of illustration. Figure 9C illustrates one touch gesture consisting of three directions: right, down-left, right. Figure 9D illustrates one touch gesture consisting of three directions: right, down, right. Figure 9E illustrates one touch gesture consisting of three directions: down, right, down. Neither the location nor the distances of each of these directions is considered by the processor 102 when identifying the directions, nor is this information stored by the portable electronic device 100. As described below, a distinct input value corresponding to each of the identified touch gestures (i.e., the series of directions) is temporarily stored in an input buffer 152 in RAM 108 for subsequent comparison operations, to be described in more detail below. In some embodiments, the touch gestures illustrated in the user interface screens of Figures 9C to 9E could collectively define a three-digit (e.g., three-gesture) touch gestures passcode sequence in which each user interface screen illustrates one of the three touch gestures. Alternatively, in embodiments in which each touch gesture is a single direction (e.g., a horizontal direction, vertical direction or diagonal direction), the user interface screens of each of Figures 9C to 9E could each independently define a three-digit (e.g., three gesture) touch gestures passcode sequence. That is, each direction in a given user interface screen illustrates one of the three touch gestures.

In some embodiments, the processor 102 is configured to identify touch gestures which are swipe gestures. A swipe gestures has a single direction which is evaluated with respect to an initial contact point (e.g., centroid) of the touch event at which the finger makes contact with the touch-sensitive display 118 and a terminal or ending contact point at which the finger is lifted from the touch-sensitive display 118 while in motion. This may reduce processing as the processor 102 does not utilize the information from all contact points of the entire gesture to resolve the direction of the touch gesture.

Examples of swipe gestures include a horizontal swipe gesture, a vertical swipe gesture, and a diagonal swipe gesture. A horizontal swipe gesture typically comprises an initial contact with the touch-sensitive display 118 towards its left or right edge to initialize the gesture, followed by a horizontal movement of the point of contact from the location of the initial contact to the opposite edge while maintaining continuous contact with the touch-sensitive display 118, and a breaking of the contact at the opposite edge of the touch-sensitive display 118 to complete the horizontal swipe gesture. Similarly, a vertical swipe gesture typically comprises an initial contact with the touch-sensitive display 118 towards its top or bottom edge to initialize the gesture, followed by a vertical movement of the point of contact from the location of the initial contact to the opposite edge while maintaining continuous contact with the touch-sensitive display 118, and a breaking of the contact at the opposite edge of the touch-sensitive display 118 to complete the vertical swipe gesture.

A diagonal swipe gesture typically comprises an initial contact with the touch-sensitive display 118 towards a corner to initialize the gesture, following by a diagonal movement of the point of contact from the location of the initial contact to the opposite corner while maintaining continuous contact with the touch-sensitive display 118. Using the initial contact point and the end contact point, the processor 102 determines the direction of the gesture. For example, a horizontal swipe gesture could correspond to either a left or right direction.

Swipe gestures can be of various lengths, can be initiated in various places on the touch-sensitive display 118, and need not span the full dimension of the touch-sensitive display 118. In addition, breaking contact of a swipe can be gradual in that contact pressure on the touch-sensitive display 118 is gradually reduced while the swipe gesture is still underway.

Depending on the embodiment, the processor 102 may be configured to identify touch gestures which correspond to a single direction selected from a group of predetermined directions, a series of directions in which each direction in the series is selected from a group of predetermined directions, swipe gestures selected from a group of predetermined swipes, or any combination thereof. As noted above, in some embodiments the group of predetermined directions may be any combination of horizontal direction (i.e., left or right), vertical direction (i.e., up or down) or diagonal direction (i.e., an up-right, down-right, up-left or down-left). Similarly, in some embodiments the group of predetermined swipes may be any combination of horizontal swipes (i.e., left or right swipes), vertical swipes direction (i.e., up or down swipes) or diagonal swipes (i.e., an up-right, down-right, up-left or down-left swipes).

Next, the processor 102 detects and tracks touch gestures input via the touch-sensitive display 118 (block 508). A value corresponding to each identified touch gesture is added to an input buffer 152 stored in RAM 108, or possibly memory 110, for subsequent use in comparison operations. The processor 102 is configured to interpret each touch gesture as a distinct input value which is added to the input buffer 152. In some embodiments, a value may be added to the input buffer 152 for touch gestures which are detected but not identified. For example, when only a limited set of touch gestures are recognized and identified by the processor 102, other touch gestures (i.e., touch events having a moving touch point but which are not part of the limited set by the processor 102), cause a corresponding value to be added to the input buffer 152. The value may be a distinct input value associated with all unidentified touch gestures or a random value. Alternatively, unidentified touch gestures may be ignored along with other touch events such as selection events.

Next, the processor 102 analyzes the values in the input buffer 152 to determine if the sequence of detected touch gestures matches a predetermined touch gesture "passcode" sequence (block 510). The values stored in the input buffer 152 are compared to values corresponding to the touch gesture passcode sequence and if the values are the same, there is a match. If the values are not the same, there is no match.

This may occur when the input buffer 152 is filled with distinct input values for identified touch gestures but the series or sequence in the input buffer 152 does not match the values for the predetermined touch gesture passcode sequence, or when a value corresponding to an unidentified touch gesture is included in the input buffer 152, depending on the embodiment. In both cases, there is no match and the unlock process fails. For example, when the predetermined touch gesture passcode sequence is limited to touch gestures which correspond to a single direction selected from a group of predetermined directions, a series of directions in which each direction in the series is selected from a group of predetermined directions, swipe gestures selected from a group of predetermined swipes, or a combination thereof, the performance of a different touch gesture will cause the comparison and the unlock process to fail. Limiting the predetermined touch gesture "passcode" sequence to these specific types of touch gestures may reduce processing required to identify the touch gestures as described above, as well as increasing the security inherent in the passcode sequence.

In some embodiments, predetermined submission input is required to advance to comparison block 510. The predetermined submission input may be depression or actuation of the touch-sensitive display 118 via the actuators 120 in some embodiments. This may be the simplest and most intuitive submission input. Alternatively, the predetermined submission input may be selection of a predetermined virtual button, activation of dedicated submission key, a predetermined key or key combination in a keyboard or a control button, or any other suitable input.

In other embodiments, the processor 102 may automatically perform the comparison after the number of input values recorded in input buffer 152 reaches the same number ("N") as the input values in the touch gesture passcode sequence. In yet other embodiments, a comparison is performed after each touch gesture is detected such that an incorrect entry is detected at the first instance of deviation from the predetermined touch gesture passcode sequence.

If a match exists, the portable electronic device 100 is unlocked (block 512) and the restrictions on the portable electronic device 100 are removed. Successful entry of a series of touch gestures can be indicated through a message or dialog box displayed on the touch-sensitive display 118 in some embodiments. Alternatively, the portable electronic device 100 may return to the home screen of the portable electronic device 100 or return to the user interface screen which was in use when the portable electronic device 100 was locked.

If a match does not exist, the portable electronic device 100 remains locked (block 514), the unlock process fails and processing returns to block 504. In some embodiments, the processor 102 may be configured to perform a device wipe and erase all user data and/or service data stored in memory 110 and/or RAM 108 if the user enters an incorrect touch gesture passcode sequence more than a threshold number of times without entering the correct touch gesture passcode sequence. For example, in one possible embodiment, five failed attempts to correctly enter a touch gesture passcode sequence without an intervening successful user authentication results in a device wipe.

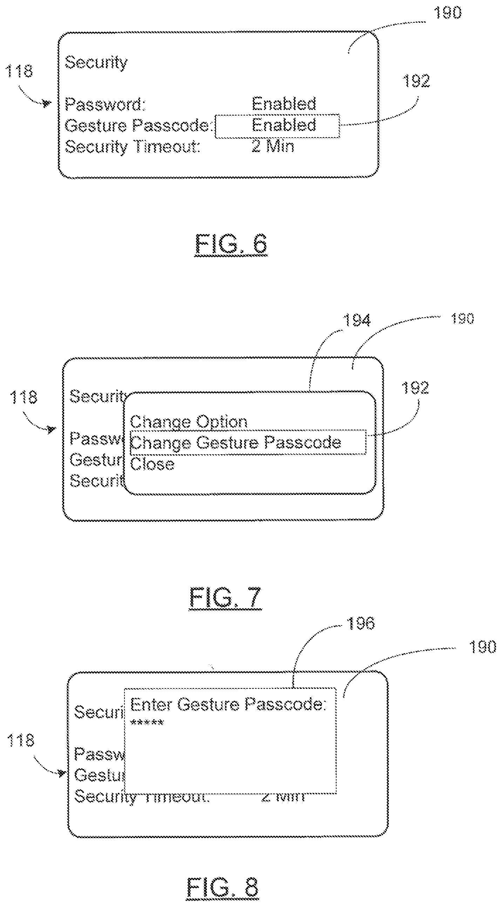

With reference to Figures 6 to 8, example user interface screens and methods for enabling/disabling the touch gesture password and changing the touch gesture password sequence will now be discussed. The user interface screens may, in some example embodiments, be enabled by the operating system 148 running on processor 102. In an example embodiment, user interface screens and methods are enabled by the operating system 148. When the portable electronic device 100 is unlocked, the user can access a security interface screen 190 that permits the user to change selected security options for the portable electronic device 100 including, for example, an option to enable/disable or change the standard alphanumeric password, an option to enable/disable or change the touch gesture passcode sequence, and an option to change the security timeout period (the time after which the portable electronic device 100 locks in the absence of user activity). In the example shown in Figure 7, a device user has caused a selection marker 192 to highlight the selectable word "Enabled" adjacent the "Gesture Passcode" option.

Selection of the word "Enabled" results in a dialog box 194 shown in Figure 7 being generated on the touch-sensitive display 118. The dialog box 194 presents the device user with selectable options in respect of the touch gesture passcode sequence including "Change Option" (which allows the user to enable or disable touch gesture password input); "Change Gesture Passcode" (which allows the user to change the touch gesture passcode sequence) and "Close", which closes the window 194. Selection of the "Change Option" option brings the user to a further screen in which they can "enable" and "disable" touch gesture password input. Selection of the "Change Gesture Passcode" option in window 194 results in an "Enter Gesture Passcode" window 196 as shown in Figure 8 being displayed.

When the window 196 is displayed, the user can register a sequence of touch gesture input events to use as a future touch gesture passcode sequence. In an example embodiment an asterisk or other visual indicator is displayed in window 196, and/or an audible sound is generated, to provide feedback to the user of the distinct touch gesture input events the user is interacting with the touch-sensitive display 118. Predetermined submission input signals that the entire desired touch gesture passcode sequence has been entered. The predetermined submission input may be selection of a predetermined virtual button, depression or actuation of the a touch-sensitive display 118 via the actuators 120, activation of dedicated submission key, a predetermined key or key combination in a keyboard or a control button, or any other suitable input. In one example embodiment, the new touch gesture passcode sequence is then stored on the memory 110 to be used a shared secret for future user authentication through the process of Figure 5. In some embodiments, double entry of the new sequence is required before the sequence is accepted and stored as the new touch gesture passcode sequence for the portable electronic device 100. In some embodiments, encryption is applied to the touch gesture passcode sequence that is stored on the portable electronic device 100. In some example embodiments, a minimum and/or maximum number of touch gesture input events are required for a valid touch gesture passcode sequence and proposed sequences that do not meet such requirements are rejected as touch gesture passcode sequences.

The shared secret entry methods disclosed herein may be applied to other system implemented protection mechanisms besides those involving unlocking of a portable electronic device 100. For example, password entry is sometimes required in order to access emails or other kinds of message-related items. A touch gesture passcode sequence as described above may be used to provide user authentication to access protected emails and other messages and documents. In some embodiments, a touch gesture passcode sequence may be used to access a message rendering application, or alternatively to open individual protected messages.

While the present disclosure is described, at least in part, in terms of methods, a person of ordinary skill in the art will understand that the present disclosure is also directed to the various components for performing at least some of the aspects and features of the described methods, be it by way of hardware components, software or any combination of the two, or in any other manner. Moreover, the present disclosure is also directed to a pre-recorded storage device or other similar computer readable medium including program instructions stored thereon for performing the methods described herein.

The present disclosure provides a method of locking and unlocking a portable electronic device having a touch-sensitive display using a series of touch gestures. The present disclosure describes, in at least some embodiments, a method and portable electronic device in which a user may unlock the portable electronic device by inputting a series of touch gestures anywhere on the touch-sensitive display and using any size.

In accordance with one embodiment of the present disclosure, there is provided a portable electronic device, comprising: a processor; a touch-sensitive display having a touch-sensitive overlay connected to the processor; wherein the processor is configured for: locking the device in response to detection of a trigger condition; detecting touch gestures performed at any location on the touch-sensitive display; adding a distinct input value associated with each identified touch gesture to an input buffer to form a series of input values; comparing the series of input values in the input buffer to a series of values corresponding to a predetermined touch gesture passcode sequence; and unlocking the device when the series of input values in the input buffer match the series of values corresponding to the predetermined touch gesture passcode sequence.

In accordance with another embodiment of the present disclosure, there is provided a method of providing security on a portable electronic device having a touch-sensitive display having a touch-sensitive overlay, the method comprising: monitoring for one or more trigger conditions; locking the device in response to detection of a trigger condition; detecting touch gestures performed at any location on the touch-sensitive display; adding a distinct input value associated with each identified touch gesture to an input buffer to form a series of input values; comparing the series of input values in the input buffer to a series of values corresponding to a predetermined touch gesture passcode sequence; and unlocking the device when the series of input values in the input buffer match the series of values corresponding to the predetermined touch gesture passcode sequence.

In accordance with a further embodiment of the present disclosure, there is provided a portable electronic device, comprising: a controller; a touch-sensitive display connected to the controller; wherein the controller is configured for: monitoring for one or more trigger conditions; locking the device in response to detection of a trigger condition; and unlocking the device in response to a sequence of input events received via a touch-sensitive display which match a predetermined passcode sequence of touch gestures.

In accordance with a further embodiment of the present disclosure, there is provided a method of providing security on a portable electronic device, the method comprising: monitoring for one or more trigger conditions; locking the device in response to detection of a trigger condition; and unlocking the device in response to a sequence of input events received via a touch-sensitive display which match a predetermined passcode sequence of touch gestures.

The invention is defined only by the scope of the appended claims.

## Claims

1. A portable electronic device (100), comprising:
a processor (102);
a touch-sensitive display (118) having a touch-sensitive overlay connected to the processor;
wherein the processor is configured for:
locking the device in response to detection of a trigger condition;
detecting touch gestures performed at any location on the touch-sensitive display;
adding a distinct input value associated with each identified touch gesture to an input buffer to form a series of input values;
comparing the series of input values in the input buffer to a series of values corresponding to a predetermined touch gesture passcode sequence, wherein the predetermined touch gesture passcode sequence corresponds to directions of successive touch gestures received via the touch-sensitive display; and
wherein the processor is further configured to ignore distance or length of the directions for identifying the touch gestures and to unlock the device when the series of input values in the input buffer match the series of values corresponding to the predetermined touch gesture passcode sequence.

2. The device of claim 1, wherein the processor is configured for identifying touch gestures which correspond to a single direction selected from a group of predetermined directions, a series of directions in which each direction in the series is selected from a group of predetermined directions, swipe gestures selected from a group of predetermined swipes, or any combination thereof.

3. The device of any one of claims 1 to 2, wherein the predetermined touch gesture passcode sequence is comprised of input values corresponding to touch gestures which correspond to a single direction selected from a group of predetermined directions, a series of directions in which each direction in the series is selected from a group of predetermined directions, swipe gestures selected from a group of predetermined swipes, or any combination thereof, and wherein the processor is configured for identifying touch gestures which correspond to a single direction selected from a group of predetermined directions, a series of directions in which each direction in the series is selected from a group of predetermined directions, swipe gestures selected from a group of predetermined swipes, or any combination thereof.

4. The device of claim 3, wherein the group of predetermined directions comprise any combination of a horizontal direction, vertical direction or diagonal direction, and wherein the swipe gestures comprise any combination of a horizontal swipe, vertical swipe, or diagonal swipe.

5. The device of claim 3, wherein the group of predetermined directions may comprise any combination of left, right, up, down, up-right, down-right, up-left or down-left, and wherein the swipe gestures comprise any combination of left swipe, right swipe, up swipe, down swipe, up-right swipe, down-right swipe, up-left swipe or down-left swipe.

6. The device of any one of claims 1 to 5, wherein the processor is configured to cause a blank user interface screen to be displayed on the touch-sensitive display in response to detecting predetermined input for unlocking the portable electronic device.

7. The device of any one of claims 1 to 5, wherein the processor is configured to cause a prompt for entry of the predetermined touch gesture passcode sequence to be displayed on the touch-sensitive display in response to detecting predetermined input for unlocking the portable electronic device.

8. The device of any one of claims 1 to 7, further comprising an actuator located beneath a back side of the touch-sensitive display opposite to the touch-sensitive overlay of the touch-sensitive display, wherein the touch-sensitive display is resiliently biased and moveable between at least a first position and a second position in response to externally applied forces and the actuator is actuated in the second position, and wherein the processor is configured for comparing the series of input values in the input buffer to a series of values corresponding to a predetermined touch gesture passcode sequence in response to the touch-sensitive display being pressed so to actuate the actuator.

9. The device of any one of claims 1 to 8, wherein the processor is configured for comparing the series of input values in the input buffer to the series of values corresponding to the predetermined touch gesture passcode sequence in response to each detected touch gesture.

10. The device of any one of claims 1 to 8, wherein the processor is configured for comparing the series of input values in the input buffer to a series of values corresponding to when a number of the input values in the input buffer matches a number of the input values in the predetermined touch gesture passcode sequence.

11. The device of any one of claims 1 to 10, wherein the processor is configured for adding an input value associated with unidentified touch gestures to the input buffer for each unidentified touch gesture detected.

12. The device of claim 11, wherein the input value associated with unidentified touch gestures is a distinct input value associated with all unidentified touch gestures.

13. The device of claim 11, wherein the input value associated with unidentified touch gestures is a random value.

14. A method of providing security on a portable electronic device (100) having a touch-sensitive display (118) having a touch-sensitive overlay, the method comprising:
locking the device in response to detection of a trigger condition;
detecting touch gestures performed at any location on the touch-sensitive display;
adding a distinct input value associated with each identified touch gesture to an input buffer to form a series of input values;
comparing the series of input values in the input buffer to a series of values corresponding to a predetermined touch gesture passcode sequence,
wherein the predetermined touch gesture passcode sequence corresponds to directions of successive touch gestures received via the touch-sensitive display, and the distance or length of the directions is ignored for identifying the touch gestures; and
unlocking the device when the series of input values in the input buffer match the series of values corresponding to the predetermined touch gesture passcode sequence.

15. Computer readable medium including program instructions stored thereon for performing the method of claim 14.

## Patentansprüche

1. Tragbares elektronisches Gerät (100), umfassend:
einen Prozessor (102);
eine berührungsempfindliche Anzeige (118) mit einer berührungsempfindlichen Überdeckung, die mit dem Prozessor verbunden ist;
wobei der Prozessor zu folgendem konfiguriert ist:
Sperren des Geräts in Reaktion auf die Erkennung einer Ansteuerbedingung;
Erkennen von Berührungsgesten, die an jeglicher Stelle der berührungsempfindlichen Anzeige ausgeführt werden; Hinzufügen eines eindeutigen Eingabewerts, der mit jeder identifizierten Berührungsgeste assoziiert ist, zu einem Eingabepuffer zum Ausbilden einer Reihe von Eingabewerten;
Vergleichen der Reihe von Eingabewerten im Eingabepuffer mit einer Reihe von Werten, die einer vorgegebenen Berührungsgestenzugangscodesequenz entsprechen, wobei die vorgegebene Berührungsgestenzugangscodesequenz Richtungen von aufeinanderfolgenden Berührungsgesten entspricht, die über die berührungsempfindliche Anzeige empfangen werden; und
wobei der Prozessor ferner zum Ignorieren von Distanz oder Länge der Richtungen zum Identifizieren der Berührungsgesten und zum Entsperren des Geräts konfiguriert ist, wenn die Reihe von Eingabewerten im Puffer mit der Reihe von Werten übereinstimmt, die der vorgegebenen Berührungsgestenzugangscodesequenz entsprechen.

2. Gerät nach Anspruch 1, wobei der Prozessor zum Identifizieren von Berührungsgesten konfiguriert ist, die einer einzelnen Richtung, welche aus einer Gruppe von vorgegebenen Richtungen ausgewählt ist, einer Reihe von Richtungen, bei der jede Richtung in der Reihe aus einer Gruppe von vorgegebenen Richtungen ausgewählt ist, Wischgesten, die aus einer Gruppe von vorgegebenen Wischvorgängen ausgewählt sind, oder jeglicher Kombination davon entsprechen.

3. Gerät nach einem der Ansprüche 1 oder 2, wobei die vorgegebene Berührungsgestenzugangscodesequenz aus Eingabewerten gebildet ist, die Berührungsgesten entsprechen, welche einer einzelnen Richtung, die aus einer Gruppe von vorgegebenen Richtungen ausgewählt ist, einer Reihe von Richtungen, bei der jede Richtung in der Reihe aus einer Gruppe von vorgegebenen Richtungen ausgewählt ist, Wischgesten, die aus einer Gruppe von vorgegebenen Wischvorgängen ausgewählt sind, oder jeglicher Kombination davon entsprechen, und wobei der Prozessor zum Identifizieren von Berührungsgesten konfiguriert ist, die einer einzelnen Richtung, welche aus einer Gruppe von vorgegebenen Richtungen ausgewählt ist, einer Reihe von Richtungen, bei der jede Richtung in der Reihe aus einer Gruppe von vorgegebenen Richtungen ausgewählt ist, Wischgesten, die aus einer Gruppe von vorgegebenen Wischvorgängen ausgewählt sind, oder jeglicher Kombination davon entsprechen.

4. Gerät nach Anspruch 3, wobei die Gruppe von vorgegebenen Richtungen jegliche Kombination einer horizontalen Richtung, vertikalen Richtung oder diagonalen Richtung umfasst, und wobei die Wischgesten jegliche Kombination eines horizontalen Wischvorgangs, vertikalen Wischvorgangs oder diagonalen Wischvorgangs umfassen.

5. Gerät nach Anspruch 3, wobei die Gruppe von vorgegebenen Richtungen jegliche Kombination von nach links, rechts, oben, unten, oben rechts, unten rechts, oben links oder unten links umfassen kann, und wobei die Wischgesten jegliche Kombination von Wischen nach links, Wischen nach rechts, Wischen nach oben, Wischen nach unten, Wischen nach oben rechts, Wischen nach unten rechts, Wischen nach oben links oder Wischen nach unten links umfassen.

6. Gerät nach einem der Ansprüche 1 bis 5, wobei der Prozessor zum Bewirken konfiguriert ist, dass ein leerer Benutzeroberflächenschirm in Reaktion auf das Erkennen einer vorgegebenen Eingabe zum Entsperren des tragbaren elektronischen Geräts angezeigt wird.

7. Gerät nach einem der Ansprüche 1 bis 5, wobei der Prozessor zum Bewirken konfiguriert ist, dass eine Eingabeaufforderung zur Eingabe der vorgegebenen Berührungsgestenzugangscodesequenz auf der berührungsempfindlichen Anzeige in Reaktion auf das Erkennen einer vorgegebenen Eingabe zum Entsperren des tragbaren elektronischen Geräts angezeigt wird.

8. Gerät nach einem der Ansprüche 1 bis 7, ferner umfassend ein Betätigungselement, das sich unterhalb einer Rückseite der berührungsempfindlichen Anzeige gegenüber der berührungsempfindlichen Überdeckung der berührungsempfindlichen Anzeige befindet, wobei die berührungsempfindliche Anzeige elastisch vorgespannt und beweglich zwischen einer ersten Position und einer zweiten Position ist, in Reaktion auf extern ausgeübte Kräfte und darauf, dass das Betätigungselement in der zweiten Position betätigt wird, und wobei der Prozessor zum Vergleichen der Reihe von Eingabewerten im Eingabepuffer mit einer Reihe von Werten, die einer vorgegebenen Berührungsgestenzugangscodesequenz entsprechen, in Reaktion darauf, dass die berührungsempfindliche Anzeige gedrückt wird, um das Betätigungselement zu betätigen, konfiguriert ist.

9. Gerät nach einem der Ansprüche 1 bis 8, wobei der Prozessor zum Vergleichen der Reihe von Eingabewerten im Eingabepuffer mit der Reihe von Werten, die der vorgegebenen Berührungsgestenzugangscodesequenz entsprechen, in Reaktion auf jede erkannte Berührungsgeste konfiguriert ist.

10. Gerät nach einem der Ansprüche 1 bis 8, wobei der Prozessor zum Vergleichen der Reihe von Eingangswerten im Eingangspuffer mit einer Reihe von Werten, die dahingehend entsprechen, wenn eine Anzahl der Eingabewerte im Eingabepuffer mit einer Anzahl der Eingabewerte in der vorgegebenen Berührungsgestenzugangscodesequenz übereinstimmt, konfiguriert ist.

11. Gerät nach einem der Ansprüche 1 bis 10, wobei der Prozessor zum Hinzufügen eines Eingabewerts, der mit nicht identifizierten Berührungsgesten assoziiert ist, zum Eingabepuffer für jede erkannte, nicht identifizierte Berührungsgeste konfiguriert ist.

12. Gerät nach Anspruch 11, wobei der Eingabewert, der mit nicht identifizierten Berührungsgesten assoziiert ist, ein eindeutiger Eingabewert ist, der mit allen nicht identifizierten Berührungsgesten assoziiert ist.

13. Gerät nach Anspruch 11, wobei der Eingabewert, der mit nicht identifizierten Berührungsgesten assoziiert ist, ein Zufallswert ist.

14. Verfahren zum Vorsehen von Sicherheit auf einem tragbaren elektronischen Gerät (100), das eine berührungsempfindliche Anzeige (118) mit einer berührungsempfindlichen Überdeckung aufweist, das Verfahren umfassend:
Sperren des Geräts in Reaktion auf die Erkennung einer Ansteuerbedingung;
Erkennen von Berührungsgesten, die an jeglicher Stelle der berührungsempfindlichen Anzeige ausgeführt werden; Hinzufügen eines eindeutigen Eingabewerts, der mit jeder identifizierten Berührungsgeste assoziiert ist, zu einem Eingabepuffer zum Ausbilden einer Reihe von Eingabewerten;
Vergleichen der Reihe von Eingabewerten im Eingabepuffer mit einer Reihe von Werten, die einer vorgegebenen Berührungsgestenzugangscodesequenz entsprechen,
wobei die vorgegebene Berührungsgestenzugangscodesequenz Richtungen von aufeinanderfolgenden Berührungsgesten entspricht, die über die berührungsempfindliche Anzeige empfangen werden, und die Distanz oder Länge der Richtungen zum Identifizieren der Berührungsgesten ignoriert wird; und
Entsperren des Geräts, wenn die Reihe von Eingabewerten im Puffer mit der Reihe von Werten übereinstimmt, die der vorgegebenen Berührungsgestenzugangscodesequenz entsprechen.

15. Maschinenlesbares Medium, das Programmanweisungen zum Ausführen des Verfahrens nach Anspruch 14 darauf gespeichert enthält.

## Revendications

1. Dispositif électronique portatif (100), qui comprend :
un processeur (102) ;
un écran tactile (118) qui possède un revêtement tactile relié au processeur ;
dans lequel le processeur est configuré pour :
verrouiller le dispositif en réponse à la détection d'une condition de déclenchement ;
détecter des gestes tactiles effectués à n'importe quel endroit sur l'écran tactile ;
ajouter une valeur d'entrée distincte associée à chaque geste tactile identifié à une mémoire tampon d'entrée afin de former une série de valeurs d'entrée ;
comparer la série de valeurs d'entrée contenues dans la mémoire tampon avec une série de valeurs qui correspondent à une séquence de mot de passe de geste tactile prédéterminée, dans lequel la séquence de mot de passe de geste tactile prédéterminée correspond aux directions de gestes tactiles successifs reçus via l'écran tactile ; et
dans lequel le processeur est en outre configuré pour ignorer la distance ou la longueur des directions pour identifier les gestes tactiles et pour déverrouiller le dispositif lorsque la série de valeurs d'entrée contenues dans la mémoire tampon d'entrée correspond à la série de valeurs qui correspondent à la séquence de mot de passe de geste tactile prédéterminée.

2. Dispositif selon la revendication 1, dans lequel le processeur est configuré pour identifier des gestes tactiles qui correspondent à une seule direction choisie parmi un groupe de directions prédéterminées, une série de directions dans laquelle chaque direction de la série est choisie parmi un groupe de directions prédéterminées, des gestes de balayage choisis parmi un groupe de balayages prédéterminés, ou n'importe quelle combinaison de ceux-ci.

3. Dispositif selon l'une quelconque des revendications 1 à 2, dans lequel la séquence de mot de passe de geste tactile prédéterminée est composée de valeurs d'entrée qui correspondent à des gestes tactiles qui correspondent à une seule direction choisie parmi un groupe de directions prédéterminées, une série de directions dans laquelle chaque direction de la série est choisie parmi un groupe de directions prédéterminées, des gestes de balayage choisis parmi un groupe de balayages prédéterminés, ou n'importe quelle combinaison de ceux-ci, et dans lequel le processeur est configuré pour identifier des gestes tactiles qui correspondent à une seule direction choisie parmi un groupe de directions prédéterminées, une série de directions dans laquelle chaque direction de la série est choisie parmi un groupe de directions prédéterminées, des gestes de balayage choisis parmi un groupe de balayages prédéterminés, ou n'importe quelle combinaison de ceux-ci.

4. Dispositif selon la revendication 3, dans lequel le groupe de directions prédéterminées comprend n'importe quelle combinaison d'une direction horizontale, d'une direction verticale ou d'une direction diagonale, et dans lequel les gestes de balayage comprennent n'importe quelle combinaison d'un balayage horizontal, d'un balayage vertical, ou d'un balayage diagonal.

5. Dispositif selon la revendication 3, dans lequel le groupe de directions prédéterminées peut comprend n'importe quelle combinaison de gauche, droite, haut, bas, haut droit, bas droit, haut gauche ou bas gauche, et dans lequel les gestes de balayage comprennent n'importe quelle combinaison d'un balayage vers la gauche, d'un balayage vers la droite, d'un balayage vers le haut, d'un balayage vers le bas, d'un balayage vers le haut à droite, d'un balayage vers le bas à droite, d'un balayage vers le haut à gauche ou d'un balayage vers le bas à gauche.

6. Dispositif selon l'une quelconque des revendications 1 à 5, dans lequel le processeur est configuré pour provoquer l'affichage d'un écran d'interface utilisateur vide sur l'écran tactile en réponse à la détection d'une entrée prédéterminée pour déverrouiller le dispositif électronique portatif.

7. Dispositif selon l'une quelconque des revendications 1 à 5, dans lequel le processeur est configuré pour provoquer l'affichage d'une séquence de mot de passe de geste tactile prédéterminée sur l'écran tactile en réponse à la détection d'une entrée prédéterminée pour déverrouiller le dispositif électronique portatif.

8. Dispositif selon l'une quelconque des revendications 1 à 7, qui comprend en outre un actionneur situé sous un côté arrière de l'écran tactile opposé au revêtement tactile de l'écran tactile, dans lequel l'écran tactile est incliné de manière flexible et peut se déplacer entre au moins une première position et une seconde position en réponse à des forces exercées en externe, et l'actionneur est situé dans la seconde position, et dans lequel le processeur est configuré pour comparer la série de valeurs d'entrée contenues dans la mémoire tampon d'entrée avec une série de valeurs qui correspondent à une séquence de mot de passe de geste tactile prédéterminée en réponse à un appui sur l'écran tactile afin de déclencher l'actionneur.

9. Dispositif selon l'une quelconque des revendications 1 à 8, dans lequel le processeur est configuré pour comparer la série de valeurs d'entrée contenues dans la mémoire tampon d'entrée avec la série de valeurs qui correspondent à la séquence de mot de passe de geste tactile prédéterminée en réponse à chaque geste tactile détecté.

10. Dispositif selon l'une quelconque des revendications 1 à 8, dans lequel le processeur est configuré pour comparer la série de valeurs d'entrée contenues dans la mémoire tampon d'entrée avec une série de valeurs qui correspondent au moment auquel un nombre de valeurs d'entrée dans la mémoire tampon d'entrée correspond à un nombre de valeurs d'entrée de la séquence de mot de passe de geste tactile prédéterminée.

11. Dispositif selon l'une quelconque des revendications 1 à 10, dans lequel le processeur est configuré pour ajouter une valeur d'entrée associée aux gestes tactiles non identifiés à la mémoire tampon d'entrée pour chaque geste tactile non identifié détecté.

12. Dispositif selon la revendication 11, dans lequel la valeur d'entrée associée à des gestes tactiles non identifiés est une valeur d'entrée distincte associée à tous les gestes tactiles non identifiés.

13. Dispositif selon la revendication 11, dans lequel la valeur d'entrée associée aux gestes tactiles non identifiés est une valeur aléatoire.

14. Procédé qui permet d'assurer la sécurité sur un dispositif électronique portatif (100) qui possède un écran tactile (118) ayant un revêtement tactile, le procédé comprenant :
le verrouillage du dispositif en réponse à la détection d'une condition de déclenchement ;
la détection de gestes tactiles effectués à n'importe quel endroit sur l'écran tactile ;
l'ajout d'une valeur d'entrée distincte associée à chaque geste tactile identifié à une mémoire tampon d'entrée afin de former une série de valeurs d'entrée ;
la comparaison de la série de valeurs d'entrée contenues dans la mémoire tampon d'entrée avec une série de valeurs qui correspondent à une séquence de mot de passe de geste tactile prédéterminée,
dans lequel la séquence de mot de passe de geste tactile prédéterminée correspond à des directions de gestes tactiles successifs reçus via l'écran tactile, et la distance ou la longueur des directions est ignorée pour identifier les gestes tactiles ; et
le déverrouillage du dispositif lorsque la série de valeurs d'entrée contenues dans la mémoire tampon d'entrée correspond à la série de valeurs qui correspondent à la séquence de mot de passe de geste tactile prédéterminée.

15. Support lisible par un ordinateur qui contient des instructions de programme stockées dessus afin d'exécuter le procédé selon la revendication 14.
